# DEMANDE DE BREVET EUROPEEN

(11) **EP 1 248 002 A1**
(43) Date de publication de la demande: **09.10.2002**
(21) Numéro de dépôt: 02290859.4
(22) Date de dépôt: 05.04.2002
(51) Int. Cl.: F16B 21/09, B60R 9/045

(54) **Dispositif de fixation amovible, notamment d'une barre transversale sur un toit de véhicule automobile**

(30) Priorité: 05.04.2001 FR 0104647
(71) Demandeur: Sinto Auto, 35400 Saint Malo (FR)
(72) Inventeur: Ringeard, Thierry, 35400 Saint-Malo (FR)
(74) Mandataire: Bentz, Jean-Paul

(57) **Abrégé**

L'invention concerne un dispositif de fixation amovible, par exemple d'une barre transversale sur un toit de véhicule automobile.

Ce dispositif comprend notamment une platine (3), des boutonnières (51, 52) formées dans la platine (3) et présentant des lumières d'insertion (501, 502), une patte de liaison (4) portant des tenons (61, 62) susceptibles d'être engagés dans les lumières d'insertion (501, 502) et déplacés dans les boutonnières (51, 52), et des organes de verrouillage (81, 82) pour bloquer les tenons (61, 62) dans une position de maintien à l'intérieur des boutonnières (51, 52).

## Description

L'invention concerne, de façon générale, un dispositif de fixation amovible d'une seconde pièce sur une première pièce, par exemple d'une barre transversale sur un toit de véhicule automobile.

Bien que connus depuis longtemps, ces dispositifs continuent de faire l'objet de nouveaux développements, qui visent notamment à augmenter la valeur de la force d'arrachement à laquelle ils peuvent résister, tout en diminuant leur encombrement, en particulier en réduisant les contraintes dimensionnelles requises pour leur implantation.

L'invention a précisément pour but de proposer un dispositif de fixation répondant à ce besoin.

A cette fin, le dispositif de l'invention, par ailleurs conforme à la définition générique qu'en donne le préambule ci-dessus, est essentiellement caractérisé en ce qu'il comprend au moins : une platine solidaire de la première pièce; des première et seconde boutonnières formées dans la platine et présentant des première et seconde lumières d'insertion respectives; une patte de liaison solidaire de la seconde pièce, des premier et second tenons portés par la patte de liaison, sélectivement engagés dans les lumières d'insertion par un mouvement de rapprochement réciproque effectué suivant un premier axe, et déplacés dans les boutonnières jusqu'à une position de maintien par un glissement suivant un deuxième axe transversal au premier; et des moyens de verrouillage pour bloquer sélectivement les tenons dans leur position de maintien dans les boutonnières.

Le dispositif de l'invention peut être mis en oeuvre en prévoyant que les premier et second tenons soient déplacés dans les boutonnières jusqu'à leur position de maintien par un glissement suivant une même direction le long du deuxième axe.

Il est possible, notamment dans ce cas, que les moyens de verrouillage comprennent des premier et second moyens d'indexage respectivement portés par la patte de liaison et par la platine et coopérant mutuellement pour déterminer une position de translation relative de la patte par rapport à la platine.

Dans un mode de réalisation de l'invention, le premier moyen d'indexage comprend un ergot mobile élastiquement sollicité contre la platine, le second moyen d'indexage comprend un renfoncement creusé dans la platine, et l'ergot et le renfoncement sont disposés l'un par rapport à l'autre de façon que l'ergot tombe dans le renfoncement lorsque les tenons atteignent leur position de maintien dans les boutonnières.

Dans un autre mode de réalisation de l'invention, les moyens de verrouillage comprennent une paroi appartenant à la platine et dans laquelle est ménagée la première boutonnière, une glissière appartenant à la patte de liaison, un coulisseau portant le premier tenon et monté sélectivement coulissant dans la glissière, des moyens de serrage portés par la patte de liaison et opérant sélectivement un coulissement du coulisseau le long du premier axe pour amener et maintenir le premier tenon dans une position de translation choisie dans une plage de positions possibles, et un bord d'appui porté par la patte, la paroi de la première boutonnière étant sélectivement enserrée entre le premier tenon et le bord d'appui par actionnement des moyens de serrage une fois que les tenons ont atteint leur position de maintien dans les boutonnières.

Lorsque les moyens de verrouillage comprennent des premier et second moyens d'indexage respectivement portés par la patte de liaison et par la platine, le second moyen d'indexage peut comprendre une rainure creusée dans la platine, le premier moyen d'indexage peut comprendre un coulisseau lié à la patte et engagé dans la rainure par le rapprochement réciproque, suivant le premier axe, de la patte et de la platine, et les moyens de verrouillage comprennent avantageusement des moyens de serrage pour imprimer sélectivement au coulisseau, par rapport à la patte, un mouvement suivant le deuxième axe entraînant corrélativement les tenons en translation dans les boutonnières.

Mais le dispositif de l'invention peut aussi être mis en oeuvre en prévoyant que les premier et second tenons soient montés mobiles sur la patte de liaison suivant des première et seconde directions respectives et opposées le long du deuxième axe, et soient respectivement déplacés dans les boutonnières jusqu'à leur position de maintien par un glissement suivant ces première et seconde directions, et que les moyens de verrouillage comprennent des moyens de serrage pour imprimer sélectivement aux premier et second tenons un mouvement simultané direct suivant les première et seconde directions respectives et un mouvement simultané inverse suivant les seconde et première directions respectives.

Le dispositif de l'invention peut être appliqué à la fixation d'une barre transversale sur un toit de véhicule automobile de façon telle que la première pièce soit constituée par le toit du véhicule, que la deuxième pièce soit constituée par la barre, cette application mettant en oeuvre un couple de pattes fixées à des extrémités respectives de la barre, et un couple de platines fixées au toit en regard des extrémités respectives de la barre.

D'autres caractéristiques et avantages de l'invention ressortiront clairement de la description qui en est faite ci-après, à tire indicatif et nullement limitatif, en référence aux dessins annexés, dans lesquels :
- la figure 1 est une vue en coupe partielle d'un dispositif conforme à un premier mode de réalisation possible de l'invention, appliqué à la fixation d'une barre sur un toit de véhicule automobile, la coupe étant réalisée dans un plan parallèle à l'axe longitudinal du véhicule, et les tenons étant représentés après insertion dans les lumières d'insertion et avant déplacement dans les boutonnières jusqu'à leur position de maintien;
- la figure 2 est une vue de dessus de la platine utilisée dans le dispositif illustré à la figure 1;
- la figure 3 est une vue en coupe partielle du dispositif illustré à la figure 1, la coupe étant réalisée suivant l'incidence définie par les flèches III-III de la figure 1;
- la figure 4 est une demie vue en coupe partielle d'un dispositif conforme à un deuxième mode de réalisation de l'invention, appliqué à la fixation d'une barre sur un toit de véhicule automobile, la coupe étant réalisée dans un plan perpendiculaire à l'axe longitudinal du véhicule, et les tenons étant représentés dans leur position de maintien à l'intérieur des boutonnières;
- la figure 5 est une vue de dessus de la platine utilisée dans le dispositif illustré à la figure 4;
- la figure 6 est une vue en coupe partielle d'un dispositif conforme à un troisième mode de réalisation de l'invention, appliqué à la fixation d'une barre sur un toit de véhicule automobile, la coupe étant réalisée dans un plan parallèle à l'axe longitudinal du véhicule, et les tenons étant représentés après insertion dans les lumières d'insertion et avant déplacement dans les boutonnières jusqu'à leur position de maintien;
- la figure 7 est une vue de dessus de la platine utilisée dans le dispositif illustré à la figure 6;
- la figure 8 est une demie vue en coupe partielle du dispositif illustré à la figure 6, la coupe étant réalisée suivant l'incidence définie par les flèches VIII-VIII de la figure 6;
- la figure 9 est une vue en coupe partielle d'un dispositif conforme à un quatrième mode de réalisation de l'invention, appliqué à la fixation d'une barre sur un toit de véhicule automobile, la coupe étant réalisée dans un plan parallèle à l'axe longitudinal du véhicule, et les tenons étant représentés après insertion dans les lumières d'insertion et avant déplacement dans les boutonnières jusqu'à leur position de maintien;
- la figure 10 est une vue de dessus de la platine utilisée dans le dispositif illustré à la figure 9; et
- la figure 11 est une demie vue en coupe partielle du dispositif illustré à la figure 9, la coupe étant réalisée suivant l'incidence définie par les flèches XI-XI de la figure 9.

Comme annoncé précédemment, l'invention concerne un dispositif de fixation d'une seconde pièce 2 sur une première pièce 1, la seconde pièce 2 étant, sur les figures, constituée par une barre transversale, et la première pièce 1 par le toit ou pavillon d'un véhicule automobile sur lequel cette barre doit être fixée.

Quel que soit son mode de réalisation, ce dispositif comprend essentiellement une platine 3, des boutonnières 51 et 52 formées dans la platine 3, une patte de liaison 4, des tenons 61 et 62 portés par la patte de liaison 4, et des moyens de verrouillage 7.

La platine 3 est solidaire du toit 1, la patte de liaison 4 étant quant à elle solidaire de la barre 2.

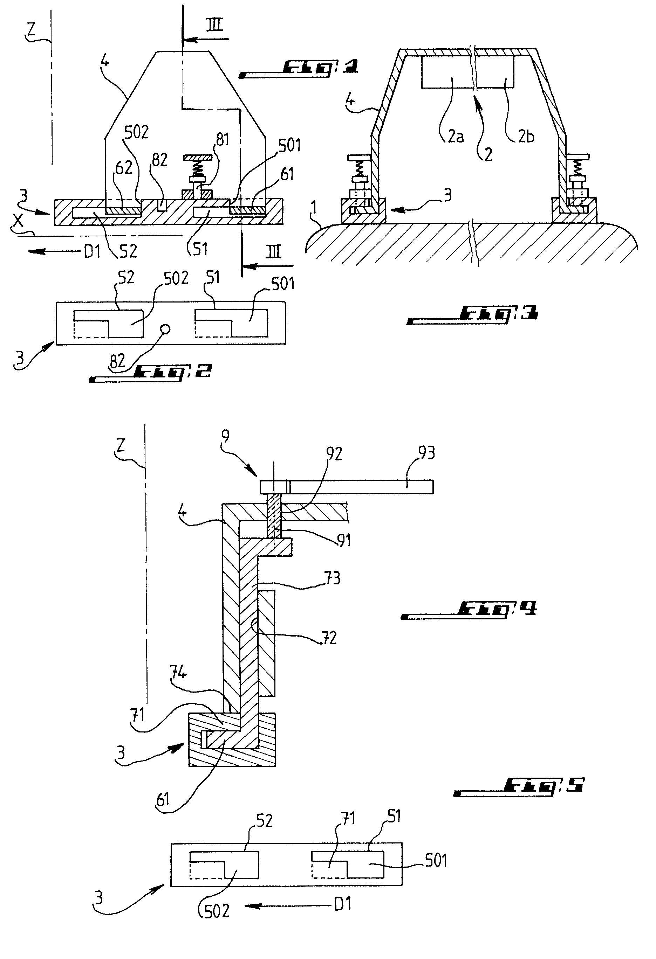

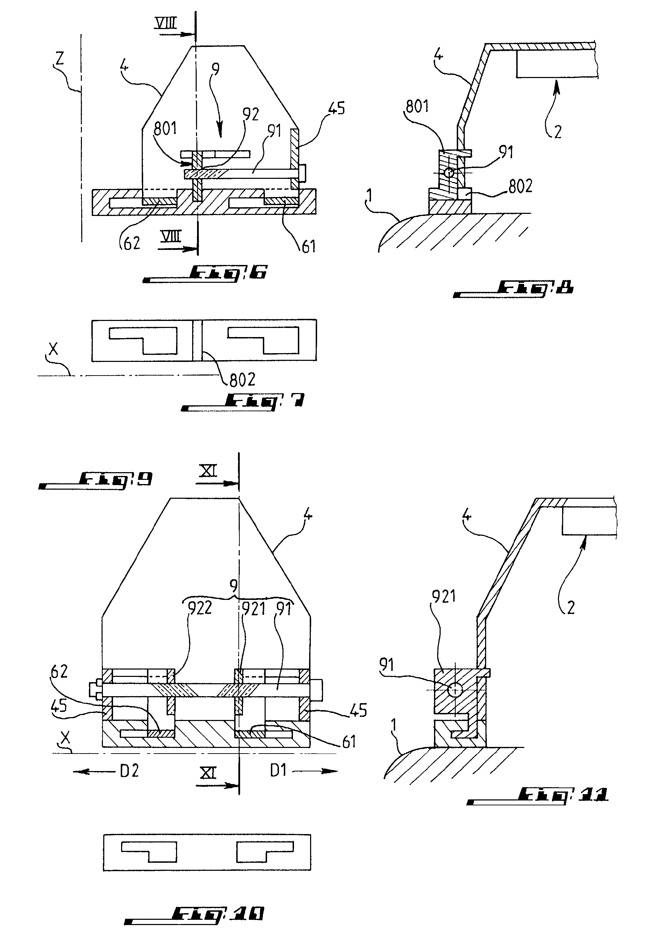

Comme le montrent les figures 2, 5, 7 et 10, les boutonnières 51 et 52 présentent des lumières d'insertion respectives 501 et 502, constituées par des élargissement de ces boutonnières.

Les tenons 61 et 62 peuvent être engagés à volonté dans ces lumières d'insertion 501 et 502 par un mouvement de rapprochement réciproque de la patte 4 et de la platine 3, effectué suivant un axe vertical Z.

Une fois engagés dans les lumières d'insertion 501 et 502, les tenons 61 et 62 peuvent être déplacés dans les boutonnières 51 et 52, jusqu'à une position de maintien, par un glissement suivant un axe horizontal X.

Dans les modes de réalisation des figures 1 à 8, les tenons 61 et 62 sont déplacés dans les boutonnières correspondantes 51 et 52, jusqu'à leur position de maintien, par un glissement suivant une même direction D1 le long de l'axe X, tandis que dans le mode de réalisation des figures 9 à 11, les tenons 61 et 62 sont déplacés dans les boutonnières correspondantes 51 et 52, jusqu'à leur position de maintien, par un glissement suivant deux directions opposées, D1 et D2, le long de l'axe X.

Enfin, les moyens de verrouillage 7, qui seront détaillés ultérieurement, ont pour fonction de bloquer les tenons 61 et 62 dans leur position de maintien à l'intérieur des boutonnières 51 et 52.

Dans les modes de réalisation des figures 1 à 3 et 6 à 8, les moyens de verrouillage comprennent des moyens d'indexage, tels que 81 et 82 (figures 1 à 3) ou 801 et 802 (figures 6 à 8), respectivement portés par la patte de liaison 4 et par la platine 3, et coopérant mutuellement pour déterminer une position de translation relative de la patte 4 par rapport à la platine 3.

Plus précisément, ces moyens d'indexage, dans le mode de réalisation des figures 1 à 3 comprennent un ergot mobile 81 élastiquement sollicité contre la platine 3, et un renfoncement 82 creusé dans la platine 3, l'ergot 81 et le renfoncement 82 étant disposés l'un par rapport à l'autre de façon telle que l'ergot 81 tombe dans le renfoncement 82 lorsque les tenons 61 et 62 atteignent leur position de maintien dans les boutonnières correspondantes 51 et 52.

Dans le mode de réalisation des figures 6 à 8, les moyens d'indexage comprennent une rainure 802 creusée dans la platine 3, et un coulisseau 801 lié à la patte 4, ce coulisseau 801 étant engagé dans la rainure 802 par le rapprochement réciproque, suivant l'axe vertical Z, de la patte 4 et de la platine 3.

Dans ce cas, les moyens de verrouillage 7 comprennent des moyens de serrage 9, par exemple constitués par une vis 91 dont la tête prend appui sur une surface 45 de la patte 4, et par un écrou 92, éventuellement formé par taraudage du coulisseau 801, et dans lequel la vis 91 est engagée.

Le vissage ou le dévissage de la vis 91 dans l'écrou 92 permet ainsi d'imprimer à volonté au coulisseau 801, par rapport à la patte 4, un mouvement suivant l'axe X au cours duquel les tenons 61 et 62 sont corrélativement entraînés en translation dans les boutonnières 51 et 52.

Dans le mode de réalisation des figures 4 et 5, les moyens de verrouillage 7 comprennent une paroi 71, une glissière 72, un coulisseau 73, des moyens de serrage 9, et un bord d'appui 74 porté par la patte 4.

La paroi 71 est constituée par une paroi de la platine 3 dans laquelle est ménagée l'une au moins des boutonnières, par exemple la boutonnière 51.

Le coulisseau 73, qui porte le tenon 61 coopérant avec la boutonnière 51, est monté coulissant dans la glissière 72, cette dernière étant formée dans la patte de liaison 4.

Les moyens de serrage 9, qui portés par la patte de liaison 4, comprennent par exemple une vis 91, un écrou 92 en l'occurrence formé par un taraudage de la patte 4, et un levier 93 solidaire de la vis 91.

Le vissage ou le dévissage de la vis 91 dans l'écrou 92 permet ainsi d'opérer à volonté un coulissement du coulisseau 73 dans la glissière 72, le long de l'axe vertical Z, pour amener et maintenir le premier tenon 61 dans une position de translation choisie dans une plage de positions possibles.

Grâce au vissage de la vis 91, il est donc possible, une fois que les tenons 61 et 62 ont atteint leur position de maintien dans les boutonnières 51 et 52, d'enserrer la paroi 71 de la boutonnière 51 entre le tenon 61 et le bord d'appui 74 de la patte 4, et donc d'immobiliser les tenons dans les boutonnières.

Dans le mode de réalisation des figures 9 à 11, les tenons 61 et 62 sont montés mobiles sur la patte de liaison 4 suivant des directions opposées D1 et D2, le long de l'axe horizontal X, de sorte qu'ils peuvent être déplacés dans les boutonnières 51 et 52, jusqu'à leur position de maintien, par glissement suivant ces directions D1 et D2.

Dans ce cas, les moyens de verrouillage 7 comprennent des moyens de serrage 9 par exemple constitués par une vis 91 montée à rotation et fixe en translation sur une ou plusieurs faces 45 de la patte 4, ainsi que deux écrous 921 et 922 respectivement liés aux tenons 61 et 62 et engagée sur des sections de pas inverses, droit et gauche, de la vis 91.

Ainsi, le vissage ou le dévissage de la vis 91 permet de déplacer simultanément les tenons 61 et 62 suivant les directions respectives D1 et D2, ou suivant les directions respectives D2 et D1.

Grâce au vissage de la vis 91, il est donc possible, une fois que les tenons 61 et 62 ont été insérés dans les lumières 501 et 502, de les faire glisser jusque dans leur position de maintien à l'intérieur des boutonnières 51 et 52, ou de les déplacer en sens inverse pour pouvoir les sortir des lumières 501 et 502.

Dans son application privilégiée à la fixation d'une barre transversale 2 sur un toit 1 de véhicule automobile, le dispositif de l'invention, comme le montre la figure 3, met en oeuvre deux pattes telles que 4, fixées aux extrémités respectives 2a et 2b de la barre 2, et deux platines telles que 3, fixées au toit 1 en regard des extrémités respectives 2a et 2b de la barre 2.

## Revendications

1. Dispositif de fixation amovible d'une seconde pièce (2) sur une première pièce (1), **caractérisé en ce qu'**il comprend au moins : une platine (3) solidaire de la première pièce (1); des première et seconde boutonnières (51, 52) formées dans la platine (3) et présentant des première et seconde lumières d'insertion respectives (501, 502); une patte de liaison (4) solidaire de la seconde pièce (2), des premier et second tenons (61, 62) portés par la patte de liaison (4), sélectivement engagés dans les lumières d'insertion (501, 502) par un mouvement de rapprochement réciproque effectué suivant un premier axe (Z), et déplacés dans les boutonnières (51, 52) jusqu'à une position de maintien par un glissement suivant un deuxième axe (X) transversal au premier (Z); et des moyens de verrouillage (7) pour bloquer sélectivement les tenons (61, 62) dans leur position de maintien dans les boutonnières (51, 52).

2. Dispositif de fixation suivant la revendication 1, **caractérisé en ce que** les premier et second tenons (61, 62) sont déplacés dans les boutonnières (51, 52) jusqu'à leur position de maintien par un glissement suivant une même direction (D1) le long du deuxième axe (X) .

3. Dispositif de fixation suivant la revendication 2, **caractérisé en ce que** les moyens de verrouillage (7) comprennent des premier et second moyens d'indexage (81, 82; 801, 802) respectivement portés par la patte de liaison (4) et par la platine (3) et coopérant mutuellement pour déterminer une position de translation relative de la patte (4) par rapport à la platine (3).

4. Dispositif de fixation suivant la revendication 3, **caractérisé en ce que** le premier moyen d'indexage (81) comprend un ergot mobile (81) élastiquement sollicité contre la platine (3), **en ce que** le second moyen d'indexage (82) comprend un renfoncement (82) creusé dans la platine (3), et **en ce que** l'ergot (81) et le renfoncement (82) sont disposés l'un par rapport à l'autre de façon que l'ergot (81) tombe dans le renfoncement (82) lorsque les tenons (61, 62) atteignent leur position de maintien dans les boutonnières (51, 52).

5. Dispositif de fixation suivant l'une quelconque des revendications précédentes, **caractérisé en ce que** les moyens de verrouillage (7) comprennent une paroi (71) appartenant à la platine (3) et dans laquelle est ménagée la première boutonnière (51), une glissière (72) appartenant à la patte de liaison (4), un coulisseau (73) portant le premier tenon (61) et monté sélectivement coulissant dans la glissière (72), des moyens de serrage (9) portés par la patte de liaison (4) et opérant sélectivement un coulissement du coulisseau (73) le long du premier axe (Z) pour amener et maintenir le premier tenon (61) dans une position de translation choisie dans une plage de positions possibles, et un bord d'appui (74) porté par la patte (4), la paroi (71) de la première boutonnière (51) étant sélectivement enserrée entre le premier tenon (61) et le bord d'appui (74) par actionnement des moyens de serrage (9) une fois que les tenons (61, 62) ont atteint leur position de maintien dans les boutonnières (51, 52).

6. Dispositif de fixation suivant la revendication 3, **caractérisé en ce que** le second moyen d'indexage (802) comprend une rainure (802) creusée dans la platine (3), **en ce que** le premier moyen d'indexage (801) comprend un coulisseau (801) lié à la patte (4) et engagé dans la rainure (802) par le rapprochement réciproque, suivant le premier axe (Z), de la patte (4) et de la platine (3), et **en ce que** les moyens de verrouillage (7) comprennent des moyens de serrage (9) pour imprimer sélectivement au coulisseau (801), par rapport à la patte (4), un mouvement suivant le deuxième axe (X) entraînant corrélativement les tenons (61, 62) en translation dans les boutonnières (51, 52).

7. Dispositif de fixation suivant la revendication 1, **caractérisé en ce que** les premier et second tenons (61, 62) sont montés mobiles sur la patte de liaison (4) suivant des première et seconde directions respectives et opposées (D1, D2) le long du deuxième axe (X), et sont respectivement déplacés dans les boutonnières (51, 52) jusqu'à leur position de maintien par un glissement suivant ces première et seconde directions (D1, D2), et **en ce que** les moyens de verrouillage (7) comprennent des moyens de serrage (9) pour imprimer sélectivement aux premier et second tenons (61, 62) un mouvement simultané direct suivant les première et seconde directions respectives (D1, D2) et un mouvement simultané inverse suivant les seconde et première directions respectives (D2, D1).

8. Application du dispositif de fixation suivant l'une quelconque des revendications 1 à 7 à la fixation d'une barre transversale (2) sur un toit (1) de véhicule automobile, **caractérisée en ce que** la première pièce (1) est constituée par le toit (1) du véhicule, **en ce que** la deuxième pièce (2) est constituée par la barre (2), et **en ce qu'**elle met en oeuvre un couple de pattes (4) fixées à des extrémités respectives (2a, 2b) de la barre (2), et un couple de platines (3) fixées au toit (1) en regard des extrémités respectives (2a, 2b) de la barre (2).
